# EUROPÄISCHE PATENTSCHRIFT

(11) **EP 4 463 679 B1**
(45) Veröffentlichungstag und Bekanntmachung des Hinweises auf die Patenterteilung: **09.09.2026**
(21) Anmeldenummer: 22835253.0
(22) Anmeldetag: 08.12.2022
(51) Int. Cl.: G01F 1/00, G01F 1/46, G01F 1/66, G01F 1/684

(54) **DURCHFLUSSMENGEN-MESSUNG VON WASSERSTOFF IN EINER ROHRLEITUNG**
FLOW RATE MEASUREMENT OF HYDROGEN IN A PIPELINE
MESURE DE DÉBIT D'HYDROGÈNE DANS UNE CONDUITE

(30) Priorität: 14.01.2022 DE 102022100779
(43) Veröffentlichungstag der Anmeldung: 20.11.2024
(73) Patentinhaber: Binder GmbH, 89081 Ulm (DE)
(72) Erfinder: BINDER, Robert, 89150 Laichingen (DE)
(74) Vertreter: Witte, Weller & Partner Patentanwälte mbB
(86) Internationale Anmeldenummer: PCT/EP2022/084987
(87) Internationale Veröffentlichungsnummer: WO 2023/134930

(56) Entgegenhaltungen:
- DE-A1- 102004 022 273
- JP-A- 2003 166 862

## Beschreibung

Die vorliegende Erfindung betrifft eine Messvorrichtung zur Durchflussmengen-Messung von Wasserstoff in einer Rohrleitung.

Obgleich es auf dem Markt bereits Messvorrichtungen zur Durchflussmengen-Messung von Wasserstoff gibt, funktionieren diese nicht hinreichend gut. Dies liegt unter anderem daran, dass eine Kalibrierung der Messvorrichtungen aufgrund der stofflichen und physikalischen Eigenschaften von Wasserstoff nur schwer möglich ist. Der Einsatz von unkritischen Medien, wie beispielsweise Helium oder andere Ersatzgase, ist entweder teuer oder die Ergebnisse sind nur bedingt aussagefähig.

Darüber hinaus wird die Kalibrierung auch dadurch erschwert, dass die außerhalb der Messvorrichtung liegenden Strömungseinflüsse, beispielsweise verursacht durch vor- bzw. nachgeschaltete Regelventile, starke Krümmungen der Rohrleitungen vor oder hinter der Messvorrichtung etc., großen Einfluss auf die Messergebnisse haben und bei der Kalibrierung kaum abbildbar sind.

Die JP 2003 166862 A offenbart eine Messvorrichtung zur Durchflussmengen-Messung von einem Gas, welche in einer Rohrleitung fest verbaut ist und einen Mittelteil mit aufgeweitetem Durchmesser aufweist, worin sich ein Strömungsgleichrichter-Element und ein Lochblech befinden, ziwschen denen ein Sensorelement zur Messung der Durchflussmenge an einem Messpunkt angeordnet ist.

Vor diesem Hintergrund besteht die Aufgabe der vorliegenden Erfindung darin, eine Messvorrichtung für die Durchflussmengen-Messung von Wasserstoff bereitzustellen, die leicht zu kalibrieren ist und damit gut reproduzierbare Messwerte liefert unabhängig von der Einbausituation der Messvorrichtung.

Diese Aufgabe wird von einer Messvorrichtung zur Durchflussmengen-Messung von Wasserstoff gemäß Anspruch 1 gelöst.

Die Messvorrichtung umfasst ein Rohrleitungsstück, welches einen ersten stromaufwärts liegenden Längs-Endabschnitt und einen zweiten stromabwärts liegenden Längs-Endabschnitt aufweist, die jeweils einen ersten Innendurchmesser D1 (Anschlussnennweite) besitzen und zur Verbindung mit einer Rohrleitung vorgesehen sind, einen mittleren Längs-Abschnitt mit einem zweiten Innendurchmesser D2, wobei D2 größer ist als D1, und jeweils einen Längs-Übergangsabschnitt mit sich änderndem Innendurchmesser, der zwischen einem Längs-Endabschnitt und dem mittleren Längs-Abschnitt vorgesehen ist. Ferner sind mehrere sich radial nach innen erstreckenden Leitbleche vorgesehen, die vom ersten Längs-Endabschnitt bis in den mittleren Längs-Abschnitt verlaufen, ein Strömungsgleichrichter-Element, dass am stromaufwärts liegenden Ende des mittleren Längs-Abschnitts vorgesehen ist, und ein kreisförmiges Stauelement, dass am stromabwärts liegenden Ende des mittleren Längs-Abschnitts konzentrisch zum Rohrleitungsstück angeordnet ist und einen durchströmbaren Ringspalt definiert. Schließlich ist ein Sensorelement zur Messung der Durchflussmenge an einem Messpunkt vorgesehen, wobei der Messpunkt auf der Mittel-Längsachse des Rohrleitungsstücks in einem Abstand vom Stauelement liegt, der dem zweiten Innendurchmesser D2 entspricht. D.h. mit anderen Worten, dass der Messpunkt im sogenannten Staupunkt vor dem Stauelement liegt.

Der Vorteil dieser erfindungsgemäßen Messvorrichtung liegt darin, dass das einströmende Wasserstoffgas perfekt konditioniert wird, sodass Einflüsse von vor- oder nachgeschalteten Elementen in der Rohrleitung wirkungsvoll abgefangen werden. Insbesondere durch das Abfangen äußerer Einflüsse kann die Messvorrichtung gut kalibriert werden.

Die Aufgabe wird damit vollkommen gelöst.

Bei einer bevorzugten Weiterbildung der Erfindung ist das Strömungsgleichrichter-Element als Lochblech bzw. Schlitzblech ausgebildet. Ein solches Lochblech mit einer Vielzahl von Durchgangsöffnungen kann einfach und Kosten günstig bereitgestellt werden und führt zudem zu einem sehr geringen Druckverlust, wenn es für Wasserstoff und im mittleren Längs-Abschnitt mit erweiterten Durchmesser D2 verwendet wird. An dieser Stelle sei angemerkt, dass der Begriff "Lochblech" stellvertretend für Lochbleche und Schlitzbleche verwendet wird. D.h. das Lochblech kann Durchgangsöffnungen unterschiedlicher Geometrien aufweisen, also kreisförmige Durchgangsöffnungen, schlitzartige Durchgangsöffnungen, etc., und bevorzugt auch Kombination davon. Grundsätzlich hat das Lochblech die Aufgabe, eine Strömung, bspw. durch Bohrungen mit verschiedenen Durchmessern und Schlitzen im Außenbereich, mit einem möglichst homogenen Strömungsprofil im nachfolgenden Abschnitt zu erzeugen. Die Bohrungen und Schlitze sowie deren Positionen und freien Durchströmungsflächen lassen sich mittels CFD Strömungssimulation in einem Annäherungsverfahren ermitteln. Nur in zweiter Priorität wird dabei darauf geachtet, dass der freie Querschnitt möglichst groß ist, bspw. 40-50% der Fläche des Querschnitts des mittleren Abschnitts, was circa 70-80% der Fläche des Anschluss-Querschnitts entspricht.

Bei einer bevorzugten Weiterbildung sind vier Leitbleche vorgesehen, die in Umfangsrichtung des Rohrleitungsstücks gleichmäßig beabstandet voneinander angeordnet sind. Der Einsatz von vier Leitblechen hat sich als besonders effektiv herausgestellt, um die Tangentialströmung zu vergleichmäßigen.

Bei einer bevorzugten Weiterbildung weist das Stauelement eine gewölbte Fläche, insbesondere vergleichbar einer abgeflachten Halbkugel, auf, wobei die Wölbung entgegen der Strömungsrichtung ausgerichtet ist. Ein solches Bauteil kann kostengünstig bereitgestellt werden und führt zu einer guten Strömungs-Konditionierung als reproduzierbare, vergleichmäßigte Ringströmung innerhalb des Rohrleitungsstücks. Das Stauelement hat insbesondere zwei Aufgaben, nämlich einerseits einen Staupunkt für die Messung zu erzeugen und andererseits jegliche Strömungseinflüsse von nachgeschalteten Bauteilen nicht bis zum Messpunkt wirken zu lassen.

Bei einer bevorzugten Weiterbildung sind die beiden Längs-Endabschnitte mit jeweils einem Flansch für den Anschluss an eine Rohrleitung ausgestattet. Diese Maßnahme hat den Vorteil, dass die Messvorrichtung sehr einfach in ein bestehendes Rohrleitungssystem eingebaut werden kann.

Bei einer bevorzugten Weiterbildung weisen die Leitbleche einen radial innenliegenden Rand auf, der sich zumindest abschnittsweise parallel zur Längsachse des Rohrstücks erstreckt. Diese Ausgestaltung hat sich ebenfalls als vorteilhaft herausgestellt.

Bei einer bevorzugten Weiterbildung wird das Messelement in Form von ein oder mehreren Messspitzen bereitgestellt. Die Messspitzen werden so angeordnet, dass sie im Messpunkt liegen.

Die vorgenannte Konditionierung der Strömung, insbesondere auch die Reduzierung der Strömungsgeschwindigkeit, hat zum Ergebnis, dass sich das Messergebnis nicht verfälscht und dass die Messspitze nicht zu stark abkühlt, und bei einigen Messverfahren wie zum Beispiel bei Massestrommessungen nach dem thermischen Verfahren sich die Messspanne vorteilhaft erhöht.

Bei einer bevorzugten Weiterbildung werden die Innendurchmesser D2 und D1 so gewählt, dass sie in einem Verhältnis von 1,17 bis 1,3 (D2/D1 = 1,17 bis 1,3), bevorzugt etwa 1,25 liegen. Beträgt der Innendurchmesser D1 bspw. etwa 80 mm und liegt der zweite Innendurchmesser D2 dann in einem Bereich von etwa 100 mm.

Bei einer bevorzugten Weiterbildung ist das Stauelement als Klöpperboden nach DIN 28011 ausgebildet. Diese Maßnahme hat den Vorteil, dass das Stauelement kostengünstig bereitgestellt werden kann, da es sich um ein Standardbauteil handelt. An dieser Stelle sei jedoch angemerkt, dass es auch von dieser DIN-Norm abweichende Klöpperböden gibt, die ebenfalls eingesetzt werden können.

Bei einer bevorzugten Weiterbildung beträgt die Länge des Rohrleitungsstücks das Sieben- bis Zwölffache des ersten Innendurchmessers D1. Weiter bevorzugt ist das Strömungsgleichrichter-Element -in Strömungsrichtung gesehen- vom Ende des mittleren Längs-Abschnitts in einem Abstand von 0,5 mal D2 angeordnet.

Bei einer bevorzugten Weiterbildung sind im ersten Längs-Endabschnitt mehrere, vorzugsweise vier schräg in Strömungsrichtung nach innen ragende Platten bzw. Laschen vorgesehen. Diese Maßnahme hat den Vorteil, dass eine weitere Strömungs-Konditionierung zur Beruhigung einer Drallströmung herbeigeführt werden kann.

Bei einer bevorzugten Weiterbildung weist das Strömungsgleichrichter-Element eine Anzahl von ca. 30 bis 85 Öffnungen aufweist, wobei die Anzahl der Öffnungen unter anderem von der verwendeten Anschlussnennweite abhängt. Weiter bevorzugt weist das Strömungsgleichrichter-Element sowohl kreisförmige als auch schlitzartige Öffnungen aufweist, wobei die kreisförmigen Öffnungen Durchmesser von ca. 5mm bis 10mm, vorzugsweise 5mm bis 8mm aufweisen.

Bei einer bevorzugten Weiterbildung liegt das Verhältnis der Gesamtfläche der Öffnungen im Strömungsgleichrichter-Element zu der Gesamtfläche des Querschnitts des mittleren Längs-Abschnitts zwischen 40% und 50%.

Die vorgenannten Merkmale haben sich im Hinblick auf die Strömungs-Gleichrichtung als besonders vorteilhaft herausgestellt.

Die der Erfindung zugrundeliegende Aufgabe wird auch gelöst durch Verwendung einer zuvor beschriebenen Messvorrichtung in einer Rohrleitung zur Messung der Durchflussmenge von Wasserstoff.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, welche durch die Patentansprüche definiert ist.

Weitere Vorteile und Ausgestaltungen der Erfindung ergeben sich aus der Beschreibung und der beiliegenden Zeichnung. Dabei zeigen:
Figur 1a eine Seitenansicht der erfindungsgemäßen Messvorrichtung im Längsschnitt;
Figuren 1b und 1c eine Vorder- und eine Rückansicht der Messvorrichtung von Figur 1a;
Figuren 2a und 2b zwei Schnitt-Ansichten der Messvorrichtung von Figur 1a;
Figur 2c eine Ansicht eines Lochblechs, und
Figur 3 eine Seitenansicht der Messvorrichtung von Figur 1a zur Erläuterung der Abmessungen.

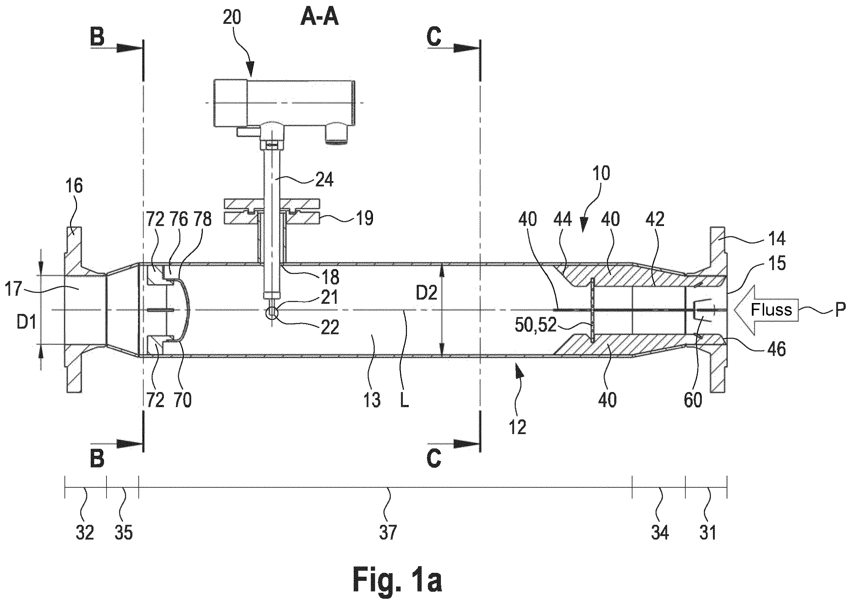

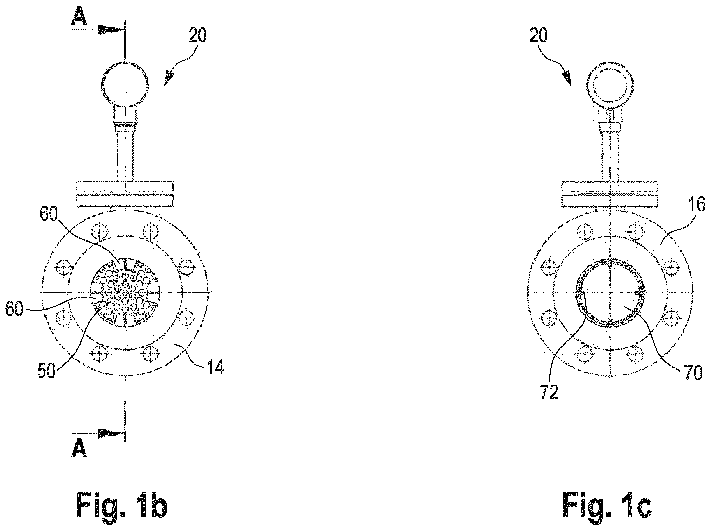

In Figur 1 ist eine erfindungsgemäße Messvorrichtung zur Durchflussmengen-Messung von Wasserstoff in einem Längsschnitt dargestellt und mit dem Bezugszeichen 10 gekennzeichnet. Die Messvorrichtung 10 umfasst ein Rohrleitungsstück 12, dass in eine Rohrleitung (nicht dargestellt) einsetzbar ausgestaltet ist. Hierfür weist die Messvorrichtung 10 bzw. das Rohrleitungsstück 12 an seinen beiden Enden jeweils einen Flansch 14,16 auf, der die Verbindung mit einer jeweils angrenzenden Rohrleitung ermöglicht.

Da die Messvorrichtung 10 richtungs- bzw. strömungsgebunden in die Rohrleitung eingesetzt werden muss, werden nachfolgend die Begriffe "stromaufwärts" und "stromabwärts" verwendet, wobei der Flansch 14 am stromaufwärts liegenden Ende und der Flansch 16 am stromabwärts liegenden Ende des Rohrleitungsstücks 12 liegen. D. h. mit anderen Worten, dass das zu messende Gas, hier bspw. Wasserstoff, im Bereich des Flansch 14 in das Rohrleitungsstück 12 einströmt und im Bereich des Flansch 16 aus dem Rohrleitungsstück 12 ausströmt, wie dies durch den Pfeil P gekennzeichnet ist.

Zur Messung der Durchflussmenge umfasst die Messvorrichtung 10 eine Messeinrichtung 20, deren Aufbau und Anordnung später im Detail erläutert werden wird.

Das Rohrleitungsstück 12 ist ein längliches Bauelement mit einem Hohlraum bzw. Innenraum 13, das sich in verschiedene Längsabschnitte gliedert. In Figur 1A sind diese verschiedenen Längsabschnitte mit den Bezugszeichen 31, 32, 34, 35 und 37 gekennzeichnet.

Der Abschnitt 31 ist ein Endabschnitt 31 des Rohrleitungsstücks 12, der am stromaufwärtigen Ende angeordnet ist. Wie sich aus Figur 1A ergibt, ist der Flansch 14 in diesem Endabschnitt 31 vorgesehen.

Am gegenüberliegenden Ende des Rohrleitungsstücks 12 bildet der Abschnitt 32 ebenfalls einen Endabschnitt 32, der damit am stromabwärtigen Ende liegt und in welchem der Flansch 16 vorgesehen ist.

Der Endabschnitt 31 sowie der Endabschnitt 32 weisen eine Einlass- bzw. Auslassöffnung 15 bzw. 17 auf, deren Öffnungs-Durchmesser gleich sind. Nachfolgend wird dieser Durchmesser mit D1 bezeichnet.

An den Endabschnitt 31 schließt sich -in Strömungsrichtung betrachtet- ein Übergangsabschnitt 34 an, dessen Innendurchmesser von dem Durchmesser D1 auf einen größeren Innendurchmesser D2 ansteigt. Wie in Figur 1A zu erkennen ist, erfolgt dieser Anstieg von D1 nach D2 vorzugsweise linear.

An diesen Übergangsabschnitt 34 schließt sich -in Strömungsrichtung betrachtet- der mittlere Abschnitt 37 an, der die Messstrecke für die Durchflussmengen-Messung aufweist. Der Innendurchmesser des mittleren Abschnitts 37 ist über die gesamte Länge konstant und entspricht dem Wert D2.

Um den Innendurchmesser D2 auf den Innendurchmesser D1 der Auslassöffnung 17 zurückzuführen, ist zwischen dem mittleren Abschnitt 37 und dem Endabschnitt 32 der Übergangsabschnitt 35 vorgesehen. Der Übergangsabschnitt 35 weist -in Strömungsrichtung betrachtet- zunächst den Innendurchmesser D2 auf, der sich dann vorzugsweise linear auf den Wert D1 verringert.

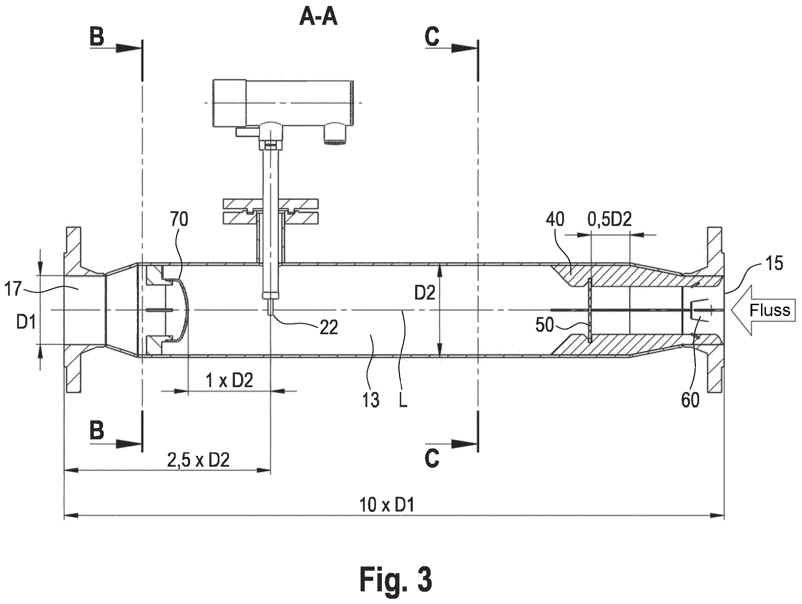

Wie sich aus Figur 1A ergibt, erstrecken sich die genannten Längsabschnitte 31, 34, 37, 35 und 32 konzentrisch zu einer gemeinsamen Längsachse L. Die Längserstreckung des mittleren Abschnitts 37 ist dabei um ein Vielfaches größer als die jeweiligen Längserstreckung der anderen Längsabschnitte. Mit Bezug auf die Figur 3 werden die Größenverhältnisse später noch im Detail erläutert.

Das Rohrleitungsstück 12 umfasst verschiedene Elemente, die der Strömung-Konditionierung dienen, um so eine gute und insbesondere reproduzierbare Messung der Durchflussmenge erzielen zu können. Ohne diese verschiedenen Elemente innerhalb des Rohrleitungsstücks 12 würden sich die Strömungsverhältnisse innerhalb des Rohrleitungsstücks deutlich abhängig von der Geometrie der Rohrleitungen vor und hinter dem Rohrleitungsstück 12 verändern.

Am stromaufwärts liegenden Ende des Rohrleitungsstücks 12 sind mehrere, vorzugsweise vier, Leitbleche 40 vorgesehen, die in Umfangsrichtung des Rohrleitungsstücks gleichmäßig beabstandet angeordnet sind. Die Leitbleche 40 erstrecken sich ausgehend von der Innenwand des Rohrleitungsstücks 12 radial nach innen, wobei eine radial innenliegende Kante 42 im Wesentlichen parallel zu der Längsachse L verläuft. Lediglich die Kanten 44 und 46 an den beiden Längsenden des Leitbleche 40 verlaufen schräg zur Längsachse L.

Wie sich aus Figur 1a ergibt, erstreckt sich das Leitbleche 40 ausgehend von der Einlassöffnung 15 stromabwärts durch den Endabschnitt 31 und den Übergangsabschnitt 34 und endet in einem Bereich des mittleren Abschnitts 37. Dieser Bereich liegt -in Strömungsrichtung betrachtet- etwa im ersten Drittel des mittleren Abschnitts 37.

Die mehreren Leitbleche 40 haben insbesondere die Aufgabe, sogenannte Drall-Strömungen des einströmenden Wasserstoffs zu verringern. Solche Drall-Strömungen können durch dem Rohrleitungsstück 12 vorgelagerte Krümmer etc. verursacht werden.

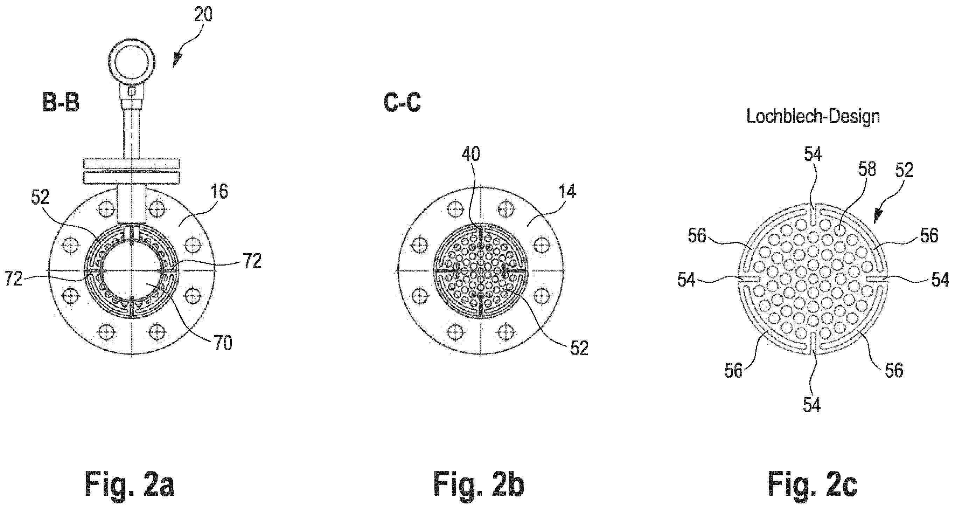

Zur weiteren Vergleichmäßigung der Strömung ist im Bereich der Leitbleche 40 im mittleren Abschnitts 37 ein Strömungsgleichrichter 50 vorgesehen. Bevorzugt ist der Strömungsgleichrichter 50 als Lochblech 52 ausgestaltet. In Figur 2C ist ein solches Lochblech 52 im Detail dargestellt.

Das Lochblech 52 besitzt die Form eines Kreises, dessen Durchmesser kleiner ist als der Innendurchmesser D2 des mittleren Abschnitts 37. Das Lochblech 52 weist mehrere radiale Einschnitte 54 auf, die so ausgebildet sind, dass jeweils ein Leitblech 40 eingreifen kann. Das Lochblech 52 kann somit an den Leitblechen 40 befestigt werden. Es ergibt sich daraus, dass die Anzahl der Einschnitte 54 der Anzahl der vorgesehenen Leitbleche 40 entspricht und der Durchmesser des Lochblechs größer ist als der Durchmesser eines gedachten Kreises entlang der inneren Kanten 42 der Leitbleche 40.

In einem äußeren Kreisring des Lochblech 52 sind Durchgangsöffnungen 56 vorgesehen, die sich jeweils zwischen benachbarten Einschnitten 54 entlang eines Kreissegments erstrecken.

In einem innen liegenden Bereich des Lochblech 52, der durch die Durchgangsöffnungen 56 begrenzt wird, sind eine Vielzahl von vorzugsweise kreisförmigen Durchgangsöffnungen 58 vorgesehen. Als besonders vorteilhaft hat sich eine Anzahl von 30 bis 85 Durchgangsöffnungen herausgestellt. Die Durchmesser der kreisförmigen Durchgangsöffnungen liegen in einem Bereich von 5mm bis 10mm, vorzugsweise 5mm bis 8mm. Besonders bevorzugt beträgt das Verhältnis von Gesamtfläche der Durchgangsöffnungen zu Gesamtfläche des mittleren Abschnitts zwischen 40% und 50%, was circa 70-80% der Querschnittsfläche des Endabschnitts entspricht.

Ein weiteres Element zur Strömungs-Konditionierung ist im Endabschnitt 31 vorgesehen. Es handelt sich hierbei um mehrere, insbesondere vier, Platten 60, die an der Innenwand des Endabschnitts 31 in Umfangsrichtung gleichmäßig beabstandet angebracht sind. Die Platten 60 sind als trapezförmige Bleche vorgesehen, die schräg zur Längsachse L nach innen ragen, wobei sie in Strömungsrichtung geneigt sind. D. h. mit anderen Worten, dass die Platten 60 die aufprallende Strömung in Strömungsrichtung und zur Längsachse hin ablenken. Wie sich aus Figur 1A ergibt, sind im vorliegenden Fall vier Platten 60 vorgesehen, die so ausgebildet sind, dass sie auf die Leitbleche 40 aufgesteckt bzw. mit diesen verbunden sind. An dieser Stelle sei jedoch angemerkt, dass die Platten 60 optional vorgesehen sind, also nicht notwendiges Element der erfindungsgemäßen Ausgestaltung sind.

Ein weiteres Element zur Strömungs-Konditionierung ist am anderen Ende des mittleren Abschnitts 37 in Form eines Stauelements 70 vorgesehen. Das Stauelement 70 ist kreisförmig ausgebildet und konzentrisch zur Längsachse L über mehrere, vorzugsweise vier, Halteelemente 72 an der Innenwand des mittleren Abschnitts 37 gehalten. Der Durchmesser des Stauelement 70 ist kleiner als der Innendurchmesser D2, sodass zwischen Stauelement 70 und der Innenwand des mittleren Abschnitts 37 ein Ringspalt 76 definiert wird. Wie sich aus Figur 1A ergibt, ist das Stauelement 70 unmittelbar vor dem Übergangsabschnitt 35 platziert. Das Stauelement 70 ist bevorzugt um zwei Nennweiten kleiner als der Durchmesser der Messstrecke, also der Innendurchmesser D2 des mittleren Längs-Abschnitts 37. Das Verhältnis von Durchmesser des Stauelements zu Innendurchmesser D2 des mittleren Längs-Abschnitts 37 liegt bevorzugt im Bereich von 45% bis 60%.

Das Stauelement 70 ist vorzugsweise halbkugelförmig oder kalottenförmige ausgebildet mit einem abgewinkelten Randbereich 78, der in etwa parallel zur Längsachse L liegt. Das Stauelement 70 ist zudem so angeordnet, dass sich die Wölbung stromaufwärts richtet, sodass der Mittelpunkt des kreisförmigen Stauelements den in Längsrichtung gesehen am weitesten stromaufwärts liegenden Punkt darstellt. Das Stauelement 70 könnte vorzugsweise auch als sogenannter Klöpperboden, vorzugsweise nach DIN 28011, ausgebildet sein.

Das Stauelement 70 hat die Aufgabe, einen Gegendruck aufzubauen und damit ein möglichst stabiles Strömungsprofil zu generieren und die Strömung in den Ringspalt 76 zu zwingen. Der stromaufwärts liegende Bereich innerhalb des inneren Abschnitts 37 wird dadurch strömungskonditioniert, sodass eine Messung der Durchflussmenge innerhalb dieses Bereichs vorteilhaft möglich ist.

Wie sich aus Figur 1a weiter ergibt, liegt genau in diesem strömungskonditionierten Bereich an einem definierten Messpunkt 21 (Staupunkt) zumindest eine Messspitze 22 der Messeinrichtung 20. Insbesondere liegt die Messspitze 22 im Bereich der Längsachse L, d. h. mittig (in radialer Richtung gesehen) im mittleren Abschnitts 37. Der genaue Abstand der Messspitze 22, d.h. des Messpunkts 21, zum Stauelement 70 wird später noch näher beschrieben.

An dieser Stelle sei angemerkt, dass im vorliegenden Ausführungsbeispiel eine Messvorrichtung mit einer oder mehreren Messspitzen verwendet wird, um die Durchflussmenge zu messen. Es versteht sich aber, dass auch andere Messverfahren, die ohne solche Messspitzen auskommen, verwendet werden können, solange die Messung am definierten Messpunkt 21 erfolgt. Als Beispiele seien hier thermische Verfahren oder auch ultraschallbasierte Verfahren genannt.

Die Messeinrichtung 20 weist ein rohrförmiges Element 24 auf, dass durch eine Öffnung in der Wand des Rohrleitungsstücks 12 in den Innenraum 13 hineinragt. Am Ende des rohrförmigen Elements 24 ragt dann die Messspitze 22 hervor. Es versteht sich, dass an der Öffnung, die mit dem Bezugszeichen 18 gekennzeichnet ist, eine Abdichteinrichtung 19 vorgesehen ist. Diese Abdichteinrichtung 19 sorgt dafür, dass kein Wasserstoff aus dem Innenraum 13 durch die Öffnung 18 nach außen dringen kann, aber ein Auswechseln der Messspitze möglich bleibt. Wie zuvor bereits angedeutet, dient die Messeinrichtung 20 dazu, die durch das Rohrleitungsstück 12 strömende Durchflussmenge des Wasserstoffs zu messen. Da solche Durchflussmengen-Messeinrichtungen grundsätzlich bekannt sind, soll an dieser Stelle nicht weiter auf deren Funktionsweise eingegangen werden.

Im Zusammenhang mit der Messeinrichtung 20 ist noch anzumerken, dass durch die Aufweitung des Innendurchmessers von D1 nach D2 eine Reduzierung der Strömungsgeschwindigkeit erreicht wird, um so dafür zu sorgen, dass die maximal mögliche Strömungsgeschwindigkeit und die damit einhergehende Abkühlung der Messspitze 22 bei thermischen Messverfahren nicht überschritten wird. Auch diese Maßnahme hat folglich eine positive Auswirkung auf das Messergebnis und den Messbereich.

In den Figuren 1b und 1c ist das Rohrleitungsstück 12 in Draufsicht auf die beiden Enden dargestellt. Zur Vereinfachung werden in den beiden Figuren die gleichen Bezugsziffern zur Kennzeichnung der gleichen Teile wie in Figur 1a verwendet. So sind in Figur 1b deutlich die Platten 60 zu erkennen, die sich radial nach innen zur Längsachse L hin erstrecken. Die radiale Erstreckung ist dabei nicht größer als 1/3 des Radius der Einlassöffnung 15.

in den Figuren 2a und 2b ist das Rohrleitungsstück 12 nochmals in zwei unterschiedlichen Schnittansichten entlang der Schnittlinien B-B beziehungsweise C-C dargestellt. Auch hier werden wieder die gleichen Bezugszeichen wie in Figur 1a verwendet.

Mit Bezug auf die Figur 3 wird nachfolgend auf die Dimensionierung des Rohrleitungsstücks 12 und der Platzierung verschiedener Elemente innerhalb des Rohrleitungsstücks 12 eingegangen.

Wie bereits erwähnt hat der Durchmesser der Auslassöffnung 17 als auch der Einlassöffnung 15 einen Wert D1. Dieser Durchmesser D1 hängt ab von der sogenannten Nennweite der Rohrleitungen (üblicherweise mit DN bezeichnet), an die das Rohrleitungsstück 12 angeschlossen werden soll. Als Beispiel sei an dieser Stelle eine Nennweite von DN80 genannt. Bei dieser Nennweite beträgt der Innendurchmesser ca. 80mm. Der Innendurchmesser D2 hat dann in diesem Fall eine Nennweite von DN 100, also ca. 100mm.

Die gesamte Länge des Rohrleitungsstücks 12 beträgt das Sieben- bis Zwölffache, bevorzugt das Zehnfache des Innendurchmessers D1. Der Abstand zwischen dem Mittelpunkt des Stauelement 70 und der Messspitze 22 bzw. allgemein dem Messpunkt 21 beträgt bzw. entspricht bevorzugt D2, und der Abstand der Messspitze 22/Messpunkt 21 zum Auslassende 17 des Rohrleitungsstücks 12 beträgt etwa 2,5 mal D2.

Auch ist aus Figur 3 zu erkennen, dass der Strömungsgleichrichter 50 bevorzugt 0,5 mal D2 entfernt vom Anfang des mittleren Abschnitts 37 angeordnet ist. Schließlich ist noch anzumerken, dass sich das Leitbleche 40 im mittleren Abschnitt 37 etwa ¼ mal D2 radial nach innen erstreckt. Diese Abmessungen und Positionierung der Elemente zueinander hat sich als besonders vorteilhaft herausgestellt.

Im Betrieb, wenn das Rohrleitungsstück 12 in eine Rohrleitung eingebaut ist, strömt das Wasserstoffgas entsprechend dem Pfeil P durch die Öffnung 15 in das Rohrleitungsstück 12 hinein und wird dann unmittelbar über die Leitbleche 40, optional auch die Platten 60, sowie den Strömungsgleichrichter 50 konditioniert. Durch die geringe Dichte und Viskosität von Wasserstoff beträgt der Druckverlust am Strömungsgleichrichter 50 nur wenige Millibar, die in der Praxis gut vertretbar sind. Der Einsatz von anderen Gasen würde allerdings zu ganz anderen Ergebnissen führen, sodass die vorliegende Messvorrichtung 10 insbesondere für die Messung der Durchflussmenge von Wasserstoff ausgebildet und verwendbar ist.

Durch die Aufweitung des Innendurchmessers wird die Strömungsgeschwindigkeit reduziert und die Strömung selbst beruhigt, wobei hierzu auch das stromabwärts liegende Stauelement 70 dient. Im Staupunkt des Stauelement 70 liegt der Messpunkt 21 bzw. die Messspitze 22, die die Durchflussmenge dann messen kann. Die Strömung durch den Ringspalt wie auch das Stauelement selbst haben zudem den Vorteil, dass stromabwärts liegende d. h. nachgeschaltete Elemente, bzw. Regelventile, den Messvorgang nicht beeinflussen. Die Rückwirkung eines solchen nachgeschalteten Regelventils wird sozusagen durch Stauelement und Ringspalt abgefangen.

Der große Vorteil dieser Unabhängigkeit der Messvorrichtung 10 von vor- und nachgeschalteten Elementen in den Rohrleitungen besteht darin, dass die Messvorrichtung sehr präzise auf einem Prüfstand kalibriert werden kann, ohne die außerhalb des Rohrleitungsstücks 12 liegenden Strömungsverhältnisse berücksichtigen zu müssen. Diese Einflüsse werden durch die beschriebenen Elemente weitgehend abgefangen.

## Patentansprüche

1. Messvorrichtung zur Durchflussmengen-Messung von Wasserstoff, das durch eine Rohrleitung strömt, mit
einem Rohrleitungsstück (12), welches
einen ersten stromaufwärts liegenden Längs-Endabschnitt (31) und einen zweiten stromabwärts liegenden Längs-Endabschnitt (32) aufweist, die jeweils einen ersten Innendurchmesser D1 (Anschlussnennweite) besitzen und zur Verbindung mit einer Rohrleitung vorgesehen sind,
einen mittleren Längs-Abschnitt (37) mit einem zweiten Innendurchmesser D2, wobei D2 größer ist als D1; und
und jeweils einen Längs-Übergangsabschnitt (34, 35) mit sich änderndem Innendurchmesser aufweist, der zwischen einem Längs-Endabschnitt und dem mittleren Längs-Abschnitt vorgesehen ist;
mehreren sich radial nach innen erstreckenden Leitblechen, (40) die sich vom ersten Längs-Endabschnitt (31) bis in den mittleren Längs-Abschnitt (37) verlaufen,
einem Strömungsgleichrichter-Element (50), dass am stromaufwärts liegenden Ende des mittleren Längs-Abschnitts (37) vorgesehen ist;
einem kreisförmigen Stauelement (70), dass am stromabwärts liegenden Ende des mittleren Längs-Abschnitts (37) konzentrisch zum Rohrleitungsstück (12) angeordnet ist und einen durchströmbaren Ringspalt (76) definiert; und
einem Sensorelement (22) zur Messung der Durchflussmenge an einem Messpunkt (21), wobei der Messpunkt (21) auf der Mittel-Längsachse (L) des Rohrleitungsstücks (12) in einem Abstand vom Stauelement liegt, der dem zweiten Innendurchmesser D2 entspricht.

2. Messvorrichtung nach Anspruch 1, **dadurch gekennzeichnet, dass** das Strömungsgleichrichter-Element (50) als Lochblech (52) ausgebildet ist.

3. Messvorrichtung nach Anspruch 1 oder 2, **dadurch gekennzeichnet, dass** vier Leitbleche (40) vorgesehen sind, die in Umfangsrichtung des Rohrleitungsstücks gleichmäßig beabstandet voneinander angeordnet sind.

4. Messvorrichtung nach einem der vorhergehenden Ansprüche, **dadurch gekennzeichnet, dass** das Stauelement (70) eine gewölbte Fläche, insbesondere vergleichbar einer abgeflachten Halbkugel, aufweist, wobei die Wölbung entgegen der Strömungsrichtung ausgerichtet ist.

5. Messvorrichtung nach einem der vorhergehenden Ansprüche, **dadurch gekennzeichnet, dass** die beiden Längs-Endabschnitte (31, 32) mit jeweils einem Flansch (14, 16) für den Anschluss an eine Rohrleitung ausgestattet sind.

6. Messvorrichtung nach einem der vorhergehenden Ansprüche, **dadurch gekennzeichnet, dass** die Leitbleche (40) einen radial innen liegenden Rand (42) aufweisen, der sich zumindest abschnittsweise parallel zur Längsachse (L) des Rohrstücks erstreckt.

7. Messvorrichtung nach einem der vorhergehenden Ansprüche, **dadurch gekennzeichnet, dass** das Rohrleitungsstück (12) in seiner Rohrwand eine Öffnung (18) aufweist, durch die eine Sensorspitze (22) als Sensorelement (22) einbringbar ist.

8. Messvorrichtung nach einem der vorhergehenden Ansprüche, **dadurch gekennzeichnet, dass** das Verhältnis von D2 zu D1 in einem Bereich von 1,17 bis 1,3, vorzugsweise bei 1,25 liegt.

9. Messvorrichtung nach einem der vorhergehenden Ansprüche, **dadurch gekennzeichnet, dass** das Strömungsgleichrichter-Element (50) eine Anzahl von 30 bis 85 Öffnungen aufweist.

10. Messvorrichtung nach Anspruch 9, **dadurch gekennzeichnet, dass** das Strömungsgleichrichter-Element (50) sowohl kreisförmige als auch schlitzartige Öffnungen aufweist, wobei die kreisförmigen Öffnungen Durchmesser von 5mm bis 8mm aufweisen.

11. Messvorrichtung nach Anspruch 9 oder 10, **dadurch gekennzeichnet, dass** das Verhältnis der Gesamtfläche der Öffnungen im Strömungsgleichrichter-Element (50) zu der Gesamtfläche des Querschnitts des mittleren Längs-Abschnitts (37) zwischen 40% und 50% liegt.

12. Messvorrichtung nach einem der vorhergehenden Ansprüche, **dadurch gekennzeichnet, dass** das Stauelement (70) als Klöpperboden, vorzugsweise nach DIN 28011, ausgebildet ist, wobei vorzugsweise das Verhältnis des Durchmessers des Stauelements (70) zu dem Innendurchmesser D2 des mittleren Längs-Abschnitts (37) in einem Bereich von 45% bis 60% liegt.

13. Messvorrichtung nach einem der vorhergehenden Ansprüche, **dadurch gekennzeichnet, dass**
a) das Stauelement (70) mit mehreren, vorzugsweise vier, radial angeordneten Trägerblechen (72) am Rohrleitungsstück angebracht sind; und/oder
b) die Länge des Rohrleitungsstücks (12) dem Sieben- bis Zwölffachen, vorzugsweise dem Zehnfachen, des ersten Innendurchmessers D1 entspricht; und/oder
c) das Strömungsgleichrichter-Element (50) -in Strömungsrichtung gesehen- vom Anfang des mittleren Längs-Abschnitts (37) in einem Abstand von 0,5 * D2 angeordnet ist.

14. Messvorrichtung nach einem der vorhergehenden Ansprüche, **dadurch gekennzeichnet, dass** im ersten Längs-Endabschnitt (31) mehrere, vorzugsweise vier, schräg in Strömungsrichtung nach innen ragende Platten (60) vorgesehen sind.

15. Verwendung einer Messvorrichtung nach einem der vorhergehenden Ansprüche zur Messung der Durchflussmenge von Wasserstoff, der durch eine Rohrleitung fließt.

## Claims

1. A measurement device for measuring the flow rate of hydrogen flowing through a pipe, comprising:
a pipe segment (12), which
has a first, upstream longitudinal end portion (31) and a second, downstream longitudinal end portion (32), each of which has a first inner diameter D1 (nominal connection width) and is provided for connection to a pipe,
a central longitudinal portion (37) having a second inner diameter D2, wherein D2 is greater than D1; and
and in each case a longitudinal transition portion (34, 35) having a varying inner diameter and provided between a longitudinal end portion and the central longitudinal portion;
a plurality of radially inwardly protruding baffle plates (40) which extend from the first longitudinal end portion (31) into the central longitudinal portion (37);
a flow rectifier element (50) which is provided at the upstream end of the central longitudinal portion (37);
a circular retarding element (70) which is located at the downstream end of the central longitudinal portion (37) so as to be concentric with the pipe segment (12) and defines an annular gap (76) through which a flow can pass; and
a sensor element (22) for measuring the flow rate at a measurement point (21), wherein the measurement point (21) is positioned on the central longitudinal axis (L) of the pipe segment (12) at a distance from the retarding element which corresponds to the second inner diameter D2.

2. The measurement device according to claim 1, **characterized in that** the flow rectifier element (50) is configured as a perforated plate (52).

3. The measurement device according to claim 1 or 2, **characterized in that** four baffle plates (40) are provided, which are located uniformly spaced apart from one another in the circumferential direction of the pipe segment.

4. The measurement device according to any one of the preceding claims, **characterized in that** the retarding element (70) has a curved surface, in particular comparable to a flattened hemisphere, the curvature being oriented counter to the direction of flow.

5. The measurement device according to any one of the preceding claims, **characterized in that** the two longitudinal end portions (31, 32) are in each case equipped with a flange (14, 16) for connection to a pipe.

6. The measurement device according to any one of the preceding claims, **characterized in that** the baffle plates (40) have a radially inner edge (42) which extends, at least in portions, in parallel with the longitudinal axis (L) of the pipe segment.

7. The measurement device according to any one of the preceding claims, **characterized in that** the pipe segment (12) has, in its pipe wall, an opening (18) through which a sensor tip (22) can be introduced as the sensor element (22).

8. The measurement device according to any one of the preceding claims, **characterized in that** the ratio of D2 to D1 is in a range of 1.17 to 1.3, preferably 1.25.

9. The measurement device according to any one of the preceding claims, **characterized in that** the flow rectifier element (50) has a number of 30 to 85 openings.

10. The measurement device according to claim 9, **characterized in that** the flow rectifier element (50) has both circular and slot-shaped openings, the circular openings having diameters of 5 mm to 8 mm.

11. The measurement device according to claim 9 or 10,
**characterized in that** the ratio of the total area of the openings in the flow rectifier element (50) to the total area of the cross section of the central longitudinal portion (37) is between 40% and 50%.

12. The measurement device according to any one of the preceding claims, **characterized in that** the retarding element (70) is configured as a torispherical head, preferably according to DIN 28011, the ratio of the diameter of the retarding element (70) to the inner diameter D2 of the central longitudinal portion (37) preferably being in a range of 45% to 60%.

13. The measurement device according to any one of the preceding claims, **characterized in that**
a) the retarding element (70) is attached to the pipe segment by means of a plurality of, preferably four, radially located support plates (72); and/or
b) the length of the pipe segment (12) corresponds to seven to twelve times, preferably ten times, the first inner diameter D1; and/or
c) the flow rectifier element (50), as viewed in the direction of flow, is located at a distance of 0.5 x D2 from the beginning of the central longitudinal portion (37).

14. The measurement device according to any one of the preceding claims, **characterized in that** a plurality of, preferably four, plates (60) projecting obliquely inward in the direction of flow are provided in the first longitudinal end portion (31).

15. A use of a measurement device according to any one of the preceding claims for measuring the flow rate of hydrogen flowing through a pipe.

## Revendications

1. Dispositif de mesure permettant la mesure de débit d'hydrogène traversant une conduite, comportant
un morceau de conduite (12) qui
présente une première section formant extrémité longitudinale (31) en amont et une seconde section formant extrémité longitudinale (32) en aval, lesquelles possèdent respectivement un premier diamètre intérieur D1 (diamètre nominal de raccordement) et sont prévues pour être raccordées à une conduite,
une section longitudinale centrale (37) comportant un second diamètre intérieur D2, dans lequel D2 est supérieur à D1 ; et
et présente respectivement une section formant transition longitudinale (34, 35), comportant un diamètre intérieur qui varie, prévue entre une section formant extrémité longitudinale et la section longitudinale centrale ;
plusieurs tôles-guides (40) s'étendant radialement vers l'intérieur, lesquelles s'étendent de la première section formant extrémité longitudinale (31) à la section longitudinale centrale (37),
un élément redresseur d'écoulement (50) prévu au niveau de l'extrémité en amont de la section longitudinale centrale (37) ;
un élément de retenue (70) circulaire qui est disposé au niveau de l'extrémité en aval de la section longitudinale centrale (37) de manière à être concentrique au morceau de conduite (12), et qui définit un interstice annulaire (76) pouvant être traversé ; et
un élément capteur (22) permettant la mesure du débit au niveau d'un point de mesure (21), dans lequel le point de mesure (21) est situé sur l'axe longitudinal central (L) du morceau de conduite (12) à une distance de l'élément de retenue qui correspond au second diamètre intérieur D2.

2. Dispositif de mesure selon la revendication 1, **caractérisé en ce que** l'élément redresseur d'écoulement (50) est réalisé sous forme de tôle perforée (52).

3. Dispositif de mesure selon la revendication 1 ou 2, **caractérisé en ce que** quatre tôles-guides (40) sont prévues, lesquelles sont disposées à distance régulière les unes des autres dans la direction circonférentielle du morceau de conduite.

4. Dispositif de mesure selon l'une des revendications précédentes, **caractérisé en ce que** l'élément de retenue (70) présente une surface bombée, en particulier comparable à une demi-sphère aplatie, dans lequel le bombement est orienté dans le sens opposé au sens d'écoulement.

5. Dispositif de mesure selon l'une des revendications précédentes, **caractérisé en ce que** les deux sections formant extrémités longitudinales (31, 32) sont respectivement pourvues d'une bride (14, 16) destinée au raccordement à une conduite.

6. Dispositif de mesure selon l'une des revendications précédentes, **caractérisé en ce que** les tôles-guides (40) présentent un bord (42) situé radialement à l'intérieur et qui s'étend, au moins dans certaines sections, parallèlement à l'axe longitudinal (L) du morceau de tuyau.

7. Dispositif de mesure selon l'une des revendications précédentes, **caractérisé en ce que** le morceau de conduite (12) présente une ouverture (18) dans sa paroi de tuyau, ouverture à travers laquelle une pointe de capteur (22) peut être introduite en tant qu'élément capteur (22).

8. Dispositif de mesure selon l'une des revendications précédentes, **caractérisé en ce que** le rapport entre D2 et D1 est compris dans une plage allant de 1,17 à 1,3, de préférence est de 1,25.

9. Dispositif de mesure selon l'une des revendications précédentes, **caractérisé en ce que** l'élément redresseur d'écoulement (50) présente un nombre d'ouvertures allant de 30 à 85.

10. Dispositif de mesure selon la revendication 9, **caractérisé en ce que** l'élément redresseur d'écoulement (50) présente à la fois des ouvertures circulaires et des ouvertures en forme de fente, dans lequel les ouvertures circulaires présentent un diamètre allant de 5 mm à 8 mm.

11. Dispositif de mesure selon la revendication 9 ou 10,
**caractérisé en ce que** le rapport entre la surface totale des ouvertures dans l'élément redresseur d'écoulement (50) et la surface totale de la section transversale de la section longitudinale centrale (37) est compris entre 40 % et 50 %.

12. Dispositif de mesure selon l'une des revendications précédentes, **caractérisé en ce que** l'élément de retenue (70) est réalisé sous forme de fond bombé, de préférence selon la norme DIN 28011, dans lequel le rapport entre le diamètre de l'élément de retenue (70) et le diamètre intérieur D2 de la section longitudinale centrale (37) est de préférence compris dans une plage allant de 45 % à 60 %.

13. Dispositif de mesure selon l'une des revendications précédentes, **caractérisé en ce que**
a) l'élément de retenue (70) est monté sur le morceau de conduite avec plusieurs tôles de support (72), de préférence quatre, disposées radialement ; et/ou
b) la longueur du morceau de conduite (12) correspond à sept à douze fois, de préférence à dix fois, le premier diamètre intérieur D1 ; et/ou
c) l'élément redresseur d'écoulement (50) est disposé, vu dans le sens d'écoulement, à une distance de 0,5 * D2 du début de la section longitudinale centrale (37).

14. Dispositif de mesure selon l'une des revendications précédentes, **caractérisé en ce que,** dans la première section formant extrémité longitudinale (31), plusieurs plaques (60), de préférence quatre, faisant saillie vers l'intérieur obliquement au sens d'écoulement, sont prévues.

15. Utilisation d'un dispositif de mesure selon l'une des revendications précédentes permettant la mesure du débit d'hydrogène coulant à travers une conduite.
